# EUROPÄISCHE PATENTANMELDUNG

(11) **EP 2 606 777 A1**
(43) Veröffentlichungstag der Anmeldung: **26.06.2013**
(21) Anmeldenummer: 11195667.8
(22) Anmeldetag: 23.12.2011
(51) Int. Cl.: A47J 31/08

(54) **Filterpapiereinsatz**

(71) Anmelder: Melitta Europa GmbH & Co. KG, 32427 Minden (DE)
(72) Erfinder: Aus Der Fünten, Sandra, 33739 Bielefeld (DE); Pertsch, Eduard, 32469 Petershagen (DE)
(74) Vertreter: Kleine, Hubertus

(57) **Zusammenfassung**

Ein Filterpapiereinsatz (1) zur Herstellung von Brühgetränken, insbesondere Kaffee oder Tee, mit mindestens zwei Lagen (2) aus Filterpapier, die an einem Boden (4) und an gegenüberliegenden Seitenwänden (3, 5) zur Bildung eines befüllbaren Innenraumes miteinander verbunden sind, wobei in dem Filterpapier eine Vielzahl von Schlitzen (11, 13, 15) zur Erhöhung der Durchlässigkeit eingebracht ist, wobei in einem benachbart zum Boden (4) angeordneten unteren Bereich (8) der Filterpapiereinsatz (1) weniger Schlitze (11) pro Fläche als in einem oberen benachbart zu einer Einfüllöffnung angeordneten Bereich (10) ausgebildet sind.

## Beschreibung

Die vorliegende Erfindung betrifft einen Filterpapiereinsatz zur Herstellung von Brühgetränken nach dem Oberbegriff des Anspruches 1.

Die EP 763 994 offenbart einen Filter für Aufgussgetränke, bei dem zwei Lagen aus einem faserigen Filtermaterial vorgesehen sind, in die Poren eingebracht sind. Diese Poren besitzen eine geringe Porenweite zwischen 0,1 mm bis 0,4 mm, wobei in einem Randbereich der Poren eine gewisse Faserdichte vorhanden ist. Dadurch können Pulverteilchen, wie Kaffeeteilchen, auch in relativ kleiner Größe zurückgehalten werden. Problematisch bei diesen kleinen Poren ist allerdings, dass auch Ölmoleküle zurückgehalten werden, die eine Größe zwischen 25 bis 100 µm besitzen. Solche Öle, insbesondere Kaffeeöle im Kaffeegetränk, sind Geschmacksträger und die Filterung dieser Ölmoleküle führt daher zu einer Verringerung der Intensität des Kaffeegeschmacks.

Die EP 2 067 420 offenbart einen aus Filterpapier hergestellten Filtereinsatz, bei dem in dem Filterpapier Perforationen eingebracht sind, wobei mehrere Bereiche mit unterschiedlichen Durchlässigkeiten vorhanden sind. Auch hier besteht das Problem, dass die kleinen Perforationen nicht nur Pulverteilchen filtern, sondern auch große Ölmoleküle als Geschmacksträger.

Die DE 195 16 800 offenbart einen Filterpapiereinsatz zur Herstellung von Aromaauszügen aus Kaffee oder Tee, bei dem eine Vielzahl von Schlitzen eingebracht ist, die linienartig durch Einschnitte gebildet sind. Die Schlitze können sich abhängig vom hydrostatischen Druck während des Brühvorganges öffnen. Das Öffnen der Schlitze durch den hydrostatischen Druck führt allerdings zu einer hohen Durchlässigkeit, so dass die Verweilzeit des aufgebrühten Wassers in dem Filterpapiereinsatz relativ kurz ist und Kaffeemehl in den Kaffeeextrakt gelangen kann. Zudem ist der Filterpapiereinsatz mit den gleichmäßig pro Flächeneinheit ausgebildeten Schlitzen über seine Höhe gleichmäßig durchfässig, so dass unterschiedliche Mengen von Kaffee oder Tee mit unterschiedlichen Brühzeiten gebrüht werden.

Es ist daher Aufgabe der vorliegenden Erfindung, einen Filterpapiereinsatz zur Herstellung von Brühgetränken zu schaffen, bei dem das Geschmackserlebnis optimiert ist und zudem die Brühzeiten optimal eingestellt sind.

Diese Aufgabe wird mit einem Filterpapiereinsatz mit den Merkmalen des Anspruches 1 gelöst.

Erfindungsgemäß sind in dem Filterpapier eine Vielzahl von Schlitzen zur Erhöhung der Durchlässigkeit eingebracht, wobei in einem benachbart zu dem Boden angeordneten unteren Bereich des Filterpapiereinsatzes weniger Schlitze pro Fläche als in einem oberen, benachbart zu einer Einfüllöffnung angeordneten Bereich ausgebildet sind. Dadurch ist gewährleistet, dass die Verweildauer des aufgebrühten Wassers in dem Filterpapiereinsatz auch beim Aufbrühen kleiner Mengen ausreichend lange ist. Bei größeren Mengen wird durch die höhere Anzahl an Schlitzen pro Flächeneinheit gewährleistet, dass das aufgebrühte Wasser ablaufen kann, wenn ein vorbestimmter Füllstand in dem Filterpapiereinsatz erreicht wird. Die Anordnung von Schlitzen in dem Filterpapier führt dazu, dass das Kaffeemehl weitgehend zurückgehalten wird, aber die Öle als Geschmacksträger eher durchgelassen werden. Dadurch erhöht sich der Gehalt an Kaffeeöl im Getränk, was zu einer Intensivierung des Kaffeegeschmacks führt.

Gemäß einer bevorzugten Ausgestaltung der Erfindung sind die Schlitze in dem oberen Bereich länger ausgebildet als in dem unteren Bereich. Dadurch wird die Durchlässigkeit in dem oberen Bereich weiter erhöht. Da die Fettanteile leichter sind als Wasser und daher eher im oberen Bereich des Filterpapiereinsatzes vorliegen, wird durch die Ausbildung der längeren Schlitze im oberen Bereich der Gehalt an Kaffeeöl erhöht.

Vorzugsweise sind die Schlitze wellenförmig ausgebildet. Dadurch bleiben die Schlitze vergleichsweise stabil, auch wenn ein hydrostatischer Druck an dem Filterpapiereinsatz anliegt. Dies reduziert die Durchlässigkeit für Kaffeemehl und gewährleistet aber eine Öffnungsgröße, die auch größere Ölmoleküle durchlässt. Die Länge der Schlitze kann dabei größer als 1,5 mm, insbesondere größer als 2,5 mm, sein. Die Amplitude der wellenförmigen Schlitze kann mindestens 20 %, vorzugsweise mindestens 30 %, der Länge der Schlitze betragen. Die Schlitze können beispielsweise s-förmig sein, wobei das "s" horizontal, vertikal oder schräg ausgerichtet sein kann.

Gemäß einer weiteren Ausgestaltung ist zwischen dem oberen Bereich und dem unteren Bereich ein mittlerer Bereich vorgesehen, in dem mehr Schlitze als im unteren Bereich und weniger Schlitze als im oberen Bereich pro Fläche vorgesehen sind. Dadurch werden drei Aromazonen an dem Filterpapiereinsatz bereitgestellt, die eine unterschiedliche Durchlässigkeit aufweisen.

Für ein optisch ansprechendes Erscheinungsbild sind die Schlitze in horizontalen Reihen angeordnet, wobei der Abstand zwischen den Schlitzen zwischen 5 mm und 40 mm, insbesondere 8 mm und 20 mm, liegt. Der Abstand zwischen den Schlitzen im oberen Bereich ist dabei vorzugsweise kleiner als im unteren Bereich, vorzugsweise um mehr als 20 %. Ferner können die Schlitze im unteren Bereich kürzer sein als im oberen Bereich, vorzugsweise ebenfalls um mehr als 20 %.

Um die Bereiche mit unterschiedlichen Durchlässigkeiten auch optisch voneinander zu trennen, sind vorzugsweise zumindest der obere und der untere Bereich durch eine Prägung voneinander getrennt. Beispielsweise können rahmenförmige Prägungen vorgesehen sein, die den unteren, mittleren und/oder den oberen Bereich jeweils einfassen.

Der erfindungsgemäße Filterpapiereinsatz ermöglicht vorzugsweise eine Filterung von Kaffee derart, dass der Anteil an Kaffeeöl nach einer Filtration größer als 0,025 %, insbesondere größer als 0,03 %, ist. Um den Gehalt an Kaffeeöl zu ermitteln, kann die Filterung durch Aufguss mit einer Einwaage von etwa 50g Kaffee pro 1100ml Heißwasser erfolgen. Dadurch wird der Gehalt an Kaffeeöl verglichen mit herkömmlichen Filterpapiereinsätzen erheblich erhöht, insbesondere sogar mehr als verdoppelt, was zu einer Intensivierung des Geschmacks führt.

Die Erfindung wird nachfolgend anhand eines Ausführungsbeispiels mit Bezug auf die beigefügten Zeichnungen näher erläutert. Es zeigen:
- Figur 1: eine Ansicht eines erfindungsgemäßen Filterpapiereinsatzes, und
- Figur 2: eine Tabelle zur Kaffeetilbestimmung bei einem erfindungsgemäßen Filterpapiereinsatz und einem Vergleichsbeispiel.

Ein Filterpapiereinsatz 1 umfasst zwei Lagen 2 aus einem Filterpapier, die zur Bildung eines befüllbaren Innenraumes an drei Seiten miteinander verbunden sind. An einer Seite 3 sind die Lagen über eine Faltkante miteinander verbunden, während an einem Boden 4 und einer gegenüberliegenden Seite 5 Prägenähte 6 und 7 vorgesehen sind, die die Lagen 2 miteinander verbinden. Der Filterpapiereinsatz 1 ist im Wesentlichen kegelstumpfförmig ausgebildet, wobei auch andere Formen von Filterpapiereinsätzen 1 eingesetzt werden können. Zudem kann die Faltkante statt an einer Seite auch am Boden angeordnet sein oder es können statt der gezeigten Prägenähte 6 und 7 nur eine einzige Prägenaht oder mehr Prägenähte zur Verbindung der Lagen 2 vorgesehen sein.

Das Filterpapier besteht aus einem faserigen Material auf Zellulosebasis und/oder aus Fasern aus synthetischen Materialien, wobei vorliegend auch dann von Filterpapier gesprochen wird, wenn das Material eine Mischung zwischen einem Papier und einem Vliesstoff darstellt. Das Flächengewicht des Materials liegt beispielsweise in einem Bereich zwischen 20 bis 100 g/m².

Der Filterpapiereinsatz 1 umfasst einen unteren Bereich 8, der benachbart zu dem Boden 4 angeordnet ist, einem mittleren Bereich 9 sowie einen oberen Bereich 10, der benachbart zu einer Einfüllöffnung des Filterpapiereinsatzes 1 angeordnet ist. In dem unteren Bereich sind wellenförmige Schlitze 11, in dem mittleren Bereich 9 sind wellenförmige Schlitze 13 und in dem oberen Bereich sind wellenförmige Schlitze 15 in das Filterpapier eingebracht, insbesondere durch Schneiden im Rotationsverfahren. Die Länge der wellenförmigen Schlitze 11 im unteren Bereich 8 liegt zwischen 2,5 mm und 3,9 mm, insbesondere 3 mm und 3,4 mm. Die Schlitze 11 sind in horizontalen Reihen angeordnet und der Abstand zwischen zwei Schlitzen beträgt zwischen 10 mm und 16 mm, insbesondere 12 mm bis 14 mm. In dem unteren Bereich 8, der als Anbrühzone dient, ist dadurch die Durchlässigkeit am kleinsten, um ein Quellen des Kaffeemehls zu ermöglichen.

In dem mittleren Bereich 9 besitzen die wellenförmigen Schlitze eine Länge zwischen 3 mm und 4,6 mm, insbesondere 3,6 mm und 4,0 mm. Die Schlitze 13 sind in horizontalen Reihen angeordnet, wobei der Abstand zwischen zwei Schlitzen 7 mm bis 15 mm, insbesondere 10 mm bis 12 mm, beträgt. Der mittlere Bereich 9 dient als Hauptbrühzone und die wellenförmigen Schlitze 13 sorgen für eine optimale Kontaktzeit. Die Größe der wellenförmigen Schlitze 13 sorgt dafür, dass gelöste Ölmoleküle hindurchtreten könnten.

In dem oberen Bereich 10 sind wellenförmige Schlitze 15 mit einer Länge zwischen 3,5 mm bis 5,1 mm, insbesondere 4,0 mm bis 4,6 mm, ausgebildet. Die Schlitze 15 sind in horizontalen Reihen angeordnet, wobei der Abstand zwischen den Schlitzen zwischen 5 mm und 13 mm, insbesondere zwischen 7 mm bis 11 mm, beträgt. Der obere Bereich 10 sorgt dadurch für einen schnellen Ablauf des Brühwassers. Zudem sorgt der schnelle Ablauf im oberen Bereich 10 für ein ausgewogenes Bitterstoffverhältnis. Auch die oben aufschwimmenden Öle beim Brühvorgang können optimal in den Kaffeeextrakt gelangen und werden durch den Filterpapiereinsatz 1 nicht zurückgehalten.

Die wellenförmige Ausbildung der Schlitze 11, 13 und 15 sorgt dafür, dass das Filterpaper stabil bleibt und die Schlitze 11, 13 und 15 sich während des Brühvorganges nur soweit öffnen, dass Kaffeeöl hindurchgelangen kann, aber Kaffeemehl weitestgehend im Filterpapiereinsatz 1 zurückbleibt.

Um den unteren Bereich 8 ist eine rahmenförmige Prägung 12, um den mittleren Bereich 9 ist eine rahmenförmige Prägung 14 und um den oberen Bereich ist eine rahmenförmige Prägung 16 vorgesehen. Dadurch sind die Bereiche 8, 9 und 10 optisch voneinander getrennt. Bei Bedarf kann auf die rahmenförmigen Prägungen 12, 14 und 16 auch verzichtet werden.

Die Wirkung der wellenförmigen Schlitze 11, 13 und 15 wurde zudem in einem Versuch zur Kaffeeölbestimmung aus einem Kaffeegetränk bestimmt. Dabei wurde bei einem Vergleichsbeispiel ein Filterpapiereinsatz verwendet, der eine Vielzahl von Poren im Filterpapier aufweist.

Im Vergleich dazu wurde ein erfindungsgemäßer Filterpapiereinsatz 1 verwendet. Der verwendete Filterpapiereinsatz 1 besaß im unteren Bereich 8 wellenförmige Schlitze mit einer Länge von 3,2 mm, deren Abstand zueinander 13,0 mm betrug. Im unteren Bereich 8 waren zwei horizontale Reihen von Schlitzen 11 vorgesehen.

In dem mittlren Bereich 9 waren wellenförmige Schlitze 13 mit einer Schnittlänge von 3,8 mm vorgesehen. Der horizontale Abstand zwischen den Schlitzen 13 betrug 11,0 mm. In dem mittleren Bereich 9 waren vier horizontale Reihen von Schlitzen 13 vorgesehen.

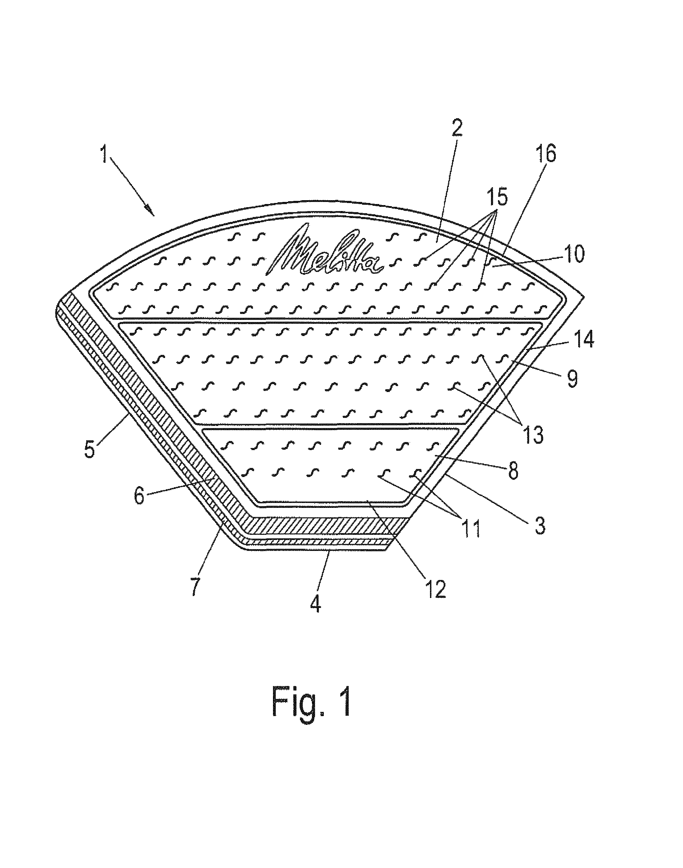

In dem oberen Bereich 10 waren wellenförmige Schlitze 15 mit einer Länge von 4,3 mm eingebracht. Der Abstand zwischen den Schlitzen 15 in horizontaler Richtung betrug 9,0 mm. Im oberen Bereich 10 waren vier horizontale Reihen von Schlitzen 15 vorgesehen, wobei die Proportionen in etwa der Darstellung der Figur 1 entsprechen.

In mehreren Versuchen wurde dann der Fettgehalt des mit heißem Wasser im Aufgussverfahren gebrühten Kaffees nach folgender Methode bestimmt:

| | |
|---|---|
| Berechnung | x [g/48g] - m₂ - m₁ |
| Formel | F[%] = (m₂ - m₁) * 100/ |

mit:
- F:: Fettgehalt in %
- E:: Einwaage an Kaffeemehl = 48,00 g
- m₂:: Masse des Rundkolbens (mit Siedesteinen) mit Fett nach der Trocknung in g
- m₁:: Masse des leeren getrockneten Rundkolbens (mit Siedesteinen) in g

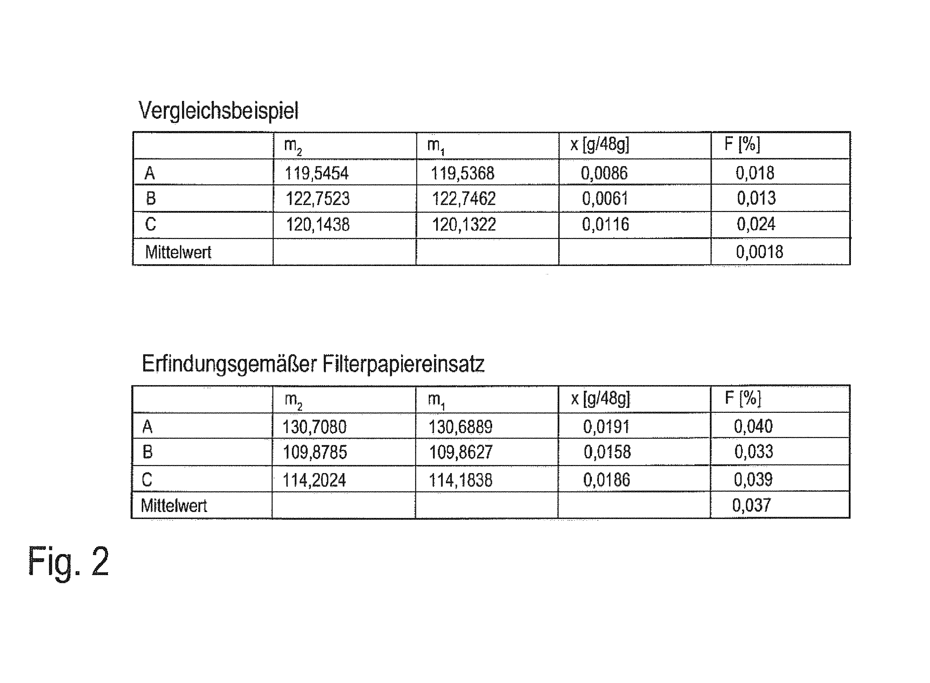

In Figur 2 sind die ermittelten Werte für das Kaffeeöl und der Massen dargestellt. Im Ergebnis besitzt der mit dem herkömmlichen Filterpapiereinsatz gefilterte Kaffee einen Kaffeeölanteil gemittelt von 0,018 %. Demgegenüber ist der Anteil an Kaffeeöl bei dem erfindungsgemäßen Filterpapiereinsatz im Mittel bei 0,037 %, also fast doppelt so hoch. Dies hängt damit zusammen, dass Kaffeeöl bei den kleinporigen Öffnungen zurückgehalten wird, während durch die längeren Schlitze 11, 13 und 15 ein erhöhter Anteil an Kaffeeöl durchgelassen wird. Dadurch kommt es zu der positiven Aromaverstärkung des Kaffees.

In einem weiteren Versuch wurden drei verschiedene Filterpapiereinsätze im Hinblick auf den Kaffeeölgehalt untersucht. Ein Filterpapiereinsatz enthielt keine Poren, ein Filterpapiereinsatz enthielt kleine kreisförmige Poren (Aromaporen) und ein Filterpapiereinsatz war erfindungsgemäß mit den wellenförmigen Schlitzen ausgebildet, wie dies oben zu dem ersten Versuch im Detail beschrieben wurde. Für die Analyse wurde jeweils ein Handaufguss hergestellt, bei dem 1100ml kochendes Wasser verwendet wurden. Das kochende Wasser wurde in einen Filterpapiereinsatz mit der Größe 1 x 4 mit einer Menge an 48g an gemahlenen Kaffeemehl eingefüllt.

Dabei wurde der Kaffee mit dem kochenden Wasser zunächst mit ca. 150ml angefeuchtet und 30s vorgebrüht. Anschließend wurde das heiße Wasser bis zum oberen Rand des Filterpapiereinsatzes eingegossen und stetig das restliche Wasser zugegeben.

| **Filterpapiereinsatz** | **kombiniert mit Kaffeesorte** | **ergibt Fettgehalt in % (Kaffeegetränk)** |
|---|---|---|
| Filterpapiereinsatz OHNE Aromaporen | Filterkaffee vorgemahlen Melitta | **0,015** |
| Filterpapiereinsatz mit Aromaporen | Filterkaffee vorgemahlen Melitta | **0,018** |
| erfindungsgemäßer Filterpapiereinsatz | Filterkaffee vorgemahlen Melitta | **0,037** |

### Bezugszeichenliste

- 1: Filterpapiereinsatz
- 2: Lage
- 3: Seite
- 4: Boden
- 5: Seite
- 6: Prägenaht
- 7: Prägenaht
- 8: unterer Bereich
- 9: mittlerer Bereich
- 10: oberer Bereich
- 11: Schlitz
- 12: Prägung
- 13: Schlitz
- 14: Prägung
- 15: Schlitze
- 16: Prägung

- F: Fettgehalt in %
- E: Einwaage (48,00 g)
- m2: Masse des Rundkolbens (mit Siedesteinen) mit Fett nach der Trocknung in g
- m1: Masse des leeren getrockneten Rundkolbens (mit Siedesteinen) in g

## Patentansprüche

1. Filterpapiereinsatz (1) zur Herstellung von Brühgetränken, insbesondere Kaffee oder Tee, mit mindestens zwei Lagen (2) aus Filterpapier, die an einem Boden (4) und an gegenüberliegenden Seitenwänden (3, 5) zur Bildung eines befüllbaren Innenraumes miteinander verbunden sind, wobei in dem Filterpapier eine Vielzahl von Schlitzen (11, 13, 15) zur Erhöhung der Durchlässigkeit eingebracht ist, **dadurch gekennzeichnet, dass** in einem benachbart zum Boden (4) angeordneten unteren Bereich (8) der Filterpapiereinsatz (1) weniger Schlitze (11) pro Fläche als in einem oberen benachbart zu einer Einfüllöffnung angeordneten Bereich (10) ausgebildet sind.

2. Filterpapiereinsatz nach Anspruch 1, **dadurch gekennzeichnet, dass** die Schlitze (15) in dem oberen Bereich (10) länger ausgebildet sind als in dem unteren Bereich (12).

3. Filterpapiereinsatz nach Anspruch 1 oder 2, **dadurch gekennzeichnet, dass** die Schlitze (11, 13, 15) wellenförmig ausgebildet sind.

4. Filterpapiereinsatz nach einem der vorhergehenden Ansprüche, **dadurch gekennzeichnet, dass** die Länge der Schlitze (11, 13, 15) größer als 1,5 mm, insbesondere größer als 2,5 mm, ausgebildet ist.

5. Filterpapiereinsatz nach einem der vorhergehenden Ansprüche, **dadurch gekennzeichnet, dass** die Amplitude der wellenförmigen Schlitze (11, 13, 15) mindestens 20 %, vorzugsweise mindestens 30 % der Länge der Schlitze (11, 13, 15) beträgt.

6. Filterpapiereinsatz nach einem der vorhergehenden Ansprüche, **dadurch gekennzeichnet, dass** die Länge der Schlitze (11, 13, 15) kleiner als 6 mm, insbesondere kleiner als 5mm oder 4mm, ausgebildet ist.

7. Filterpapiereinsatz nach einem der vorhergehenden Ansprüche, **dadurch gekennzeichnet, dass** zwischen dem oberen Bereich (10) und dem unteren Bereich (8) ein mittlerer Bereich (9) vorgesehen ist, in dem mehr Schlitze (13) als in dem unteren Bereich (12) und weniger Schlitze (13) als in dem oberen Bereich (16) vorgesehen sind.

8. Filterpapiereinsatz nach einem der vorhergehenden Ansprüche, **dadurch gekennzeichnet, dass** die Schlitze (11, 13, 15) in horizontalen Reihen angeordnet sind und der Abstand zwischen den Schlitzen (11, 13, 15) zwischen 5 mm und 40 mm, insbesondere 8 mm und 20 mm, liegt.

9. Filterpapiereinsatz nach Anspruch 8, **dadurch gekennzeichnet, dass** der Abstand zwischen den Schlitzen (11, 13, 15) im oberen Bereich (10) kleiner ist als im unteren Bereich (8), vorzugsweise um mehr als 20 %.

10. Filterpapiereinsatz nach einem der vorhergehenden Ansprüche, **dadurch gekennzeichnet, dass** die Schlitze (11) im unteren Bereich (8) kürzer sind als im oberen Bereich (10), vorzugsweise um mehr als 20 %.

11. Filterpapiereinsatz nach einem der vorhergehenden Ansprüche, **dadurch gekennzeichnet, dass** zumindest der untere und der obere Bereich (8, 10) durch eine Prägung voneinander getrennt sind.

12. Filterpapiereinsatz nach einem der vorhergehenden Ansprüche, **dadurch gekennzeichnet, dass** der untere, der mittlere und der obere Bereich (8, 9, 10) jeweils von einer rahmenförmigen Prägung umgeben sind.

13. Filterpapiereinsatz nach einem der vorhergehenden Ansprüche, **dadurch gekennzeichnet, dass** die Schlitze (11, 13, 15) s-förmig ausgebildet sind.

14. Filterpapiereinsatz nach einem der vorhergehenden Ansprüche, **dadurch gekennzeichnet, dass** der Anteil an Kaffeeöl nach einer Filtration mit dem Filterpapiereinsatz (1) von 50g Kaffeemehl und 1100ml heißem Wasser größer als 0,025 %, insbesondere größer als 0,03 %, ist.
